# EUROPEAN PATENT APPLICATION

(11) **EP 4 474 528 A2**
(43) Date of publication of application: **11.12.2024**
(21) Application number: 24161710.9
(22) Date of filing: 06.03.2024
(51) Int. Cl.: C25B 1/23, C25B 3/26, C25B 9/23, C25B 15/02, C25B 15/027, C25B 15/029, C25B 15/08

(54) **CARBON DIOXIDE ELECTROLYTIC DEVICE AND METHOD OF ELECTROLYZING CARBON DIOXIDE**

(30) Priority: 20.03.2023 JP 2023044168; 23.01.2024 JP 2024007713
(71) Applicant: Kabushiki Kaisha Toshiba, Tokyo 105-0023 (JP)
(72) Inventor: KOFUJI, Yusuke, Minato-ku, Tokyo, 105-0023 (JP); FUJIWARA, Naoya, Minato-ku, Tokyo, 105-0023 (JP); MIKOSHIBA, Satoshi, Minato-ku, Tokyo, 105-0023 (JP); KITAGAWA, Ryota, Minato-ku, Tokyo, 105-0023 (JP)
(74) Representative: Hoffmann Eitle

(57) **Abstract**

A carbon dioxide electrolytic device of an embodiment includes: an electrolysis cell that includes a cathode, an anode, a cathode flow path, an anode flow path, and a separator; a carbon dioxide supply unit; an electrolytic solution supply unit; an electrolytic solution external flow path including a first pipe connecting the electrolytic solution supply unit to a first opening provided on one end side of the anode flow path, a second pipe connected to a second opening provided on the other end side of the anode flow path, and a third pipe connecting the electrolytic solution supply unit to the second opening of the anode flow path; and an electrolytic solution switching mechanism switching between a first flow in which the electrolytic solution flows from the first opening toward the second opening and a second flow in which the electrolytic solution flows from the second opening toward the first opening.

## Description

### FIELD

Embodiments disclosed herein relate to a carbon dioxide electrolytic device and a method of electrolyzing carbon dioxide.

### BACKGROUND

In recent years, depletion of fossil fuels such as petroleum or coal has been a concern, and expectation for sustainably-usable renewable energy has been rising. Examples of the renewable energy include solar cells, wind power generation, and other energies. Because a power generation amount of these depends on weather and a natural situation, there is a problem that it is difficult to achieve stable supply of electric power. For this reason, there has been made an attempt to store the electric power generated by the renewable energy in a storage battery, to thereby stabilize the electric power. However, when the electric power is stored, there are problems that a cost is required for the storage battery, and a loss occurs at the time of the storage.

With respect to such points, attention is focused on a technology in which the electric power generated by the renewable energy is used to electrochemically reduce and convert, for example, carbon dioxide (CO₂) into a chemical substance (chemical energy) like a carbon compound such as carbon monoxide (CO), formic acid (HCOOH), methanol (CH₃OH), methane (CH₄), acetic acid (CH₃COOH), ethanol (C₂H₅OH), ethane (C₂H₆), or ethylene (C₂H₄). As a CO₂ electrolytic device, for example, a structure is being studied in which CO₂ gas is brought into contact with a cathode, and an electrolytic solution is brought into contact with an anode. Examples of a concrete configuration of an electrolytic device include an electrolysis cell with a cathode, a cathode flow path for CO₂ gas disposed along the cathode, an anode, an anode flow path for an electrolytic solution disposed along the anode, and a separator disposed between these flow paths, for example.

When the electrolytic device having the above configuration is used to continuously carry out a reaction to produce, for example, CO from CO₂, the temperature of the electrolytic solution rises to a high temperature while the electrolytic solution passes through the anode flow path, and an outlet side of the anode flow path of the electrolysis cell may become hot without much heat exchange. The high temperature at the outlet side of the anode flow path may cause damage to members such as the separators and electrodes. Furthermore, there is a risk of damage to members such as the separators and electrodes at a latter part of the flow path also in the cathode flow path. Therefore, there is a need to prevent damage to members such as separators and electrodes, as well as performance degradation, failure, and the like of the electrolysis cell based on such damage, by controlling problems that occur on the outlet side of the anode flow path and cathode flow path.

### SUMMARY

A subject be solved by the aspect of the present invention is to provide a carbon dioxide electrolytic device and a method of electrolyzing carbon dioxide that make it possible to prevent performance degradation, failure, and the like of the electrolysis cell based on damage of members such as separators and electrodes.

According to the aspects of the present invention, there is provided a carbon dioxide electrolytic device and a method of electrolyzing carbon dioxide that make it possible to prevent performance degradation, failure, and the like of the electrolysis cell based on damage of members such as separators and electrodes.

### BRIEF DESCRIPTION OF THE DRAWINGS

FIG. 1 is a sectional view illustrating a first state of a carbon dioxide electrolytic device of a first embodiment.
FIG. 2 is a sectional view illustrating a second state of the carbon dioxide electrolytic device of the first embodiment.
FIG. 3 is a plan view illustrating a first example of an anode flow path and a first state of the carbon dioxide electrolytic device on the anode flow path side of the first embodiment.
FIG. 4 is a plan view illustrating the first example of the anode flow path and a second state of the carbon dioxide electrolytic device on the anode flow path side of the first embodiment.
FIG. 5 is a plan view illustrating a second example of the anode flow path and cathode flow path in the carbon dioxide electrolytic device of the first embodiment.
FIG. 6 is a plan view illustrating a third example of the anode flow path and cathode flow path in the carbon dioxide electrolytic device of the first embodiment.
FIG. 7 is a plan view illustrating a fourth example of the anode flow path and cathode flow path in the carbon dioxide electrolytic device of the first embodiment.
FIG. 8 is a plan view illustrating a first example of a combination of the anode flow path and cathode flow path in the carbon dioxide electrolytic device of the first embodiment.
FIG. 9 is a plan view illustrating a second example of the combination of the anode flow path and cathode flow path in the carbon dioxide electrolytic device of the first embodiment.
FIG. 10 is a sectional view illustrating a first state of a carbon dioxide electrolytic device of a second embodiment.
FIG. 11 is a sectional view illustrating a second state of the carbon dioxide electrolytic device of the second embodiment.
FIG. 12 is a sectional view illustrating a first state of a carbon dioxide electrolytic device of a third embodiment.
FIG. 13 is a sectional view illustrating a second state of the carbon dioxide electrolytic device of the third embodiment.
FIG. 14 is a sectional view illustrating a first state of a carbon dioxide electrolytic device of a fourth embodiment.
FIG. 15 is a sectional view illustrating a second state of the carbon dioxide electrolytic device of the fourth embodiment.
FIG. 16 is a sectional view illustrating a carbon dioxide electrolytic device of a fifth embodiment.

### DETAILED DESCRIPTION

A carbon dioxide electrolytic device of an embodiment includes: an electrolysis cell that includes a cathode configured to reduce carbon dioxide to produce a carbon compound, an anode configured to oxidize water to produce oxygen, an anode flow path having a first opening provided on one end side and a second opening provided on the other end side and configured to supply an electrolytic solution containing water to the anode, a cathode flow path having a third opening provided on one end side and a fourth opening provided on the other end side and configured to supply carbon dioxide to the cathode, and a separator configured to separate the anode from the cathode; a carbon dioxide supply unit configured to supply the carbon dioxide to the cathode flow path; an electrolytic solution supply unit configured to supply the electrolytic solution to the anode flow path; an external flow path that includes at least one of an electrolytic solution external flow path including a first pipe configured to connect the electrolytic solution supply unit to the first opening of the anode flow path, a second pipe connected to the second opening of the anode flow path, and a third pipe configured to connect the electrolytic solution supply unit to the second opening of the anode flow path, and a carbon dioxide external flow path including a fourth pipe configured to connect the carbon dioxide supply unit to the third opening of the cathode flow path, a fifth pipe connected to the fourth opening of the cathode flow path, and a sixth pipe configured to connect the carbon dioxide supply unit to the fourth opening of the cathode flow path; and a flow path switching mechanism that includes at least one of an electrolytic solution switching mechanism configured to switch between a first flow in which the electrolytic solution flows from the first opening toward the second opening through the anode flow path and a second flow in which the electrolytic solution flows from the second opening toward the first opening through the anode flow path, and a carbon dioxide switching mechanism configured to switch between a third flow in which the carbon dioxide flows from the third opening toward the fourth opening through the cathode flow path and a fourth flow in which the carbon dioxide flows from the fourth opening toward the third opening through the cathode flow path.

Hereinafter, a carbon dioxide electrolytic device of the embodiment will be described while referring to the drawings. In each embodiment presented below, substantially the same components are denoted by the same codes, and a description thereof is sometimes partially omitted. The drawings are schematic, and a relationship between a thickness and a planar size, thickness proportions of the respective portions, and the like are sometimes different from actual ones.

### (First Embodiment)

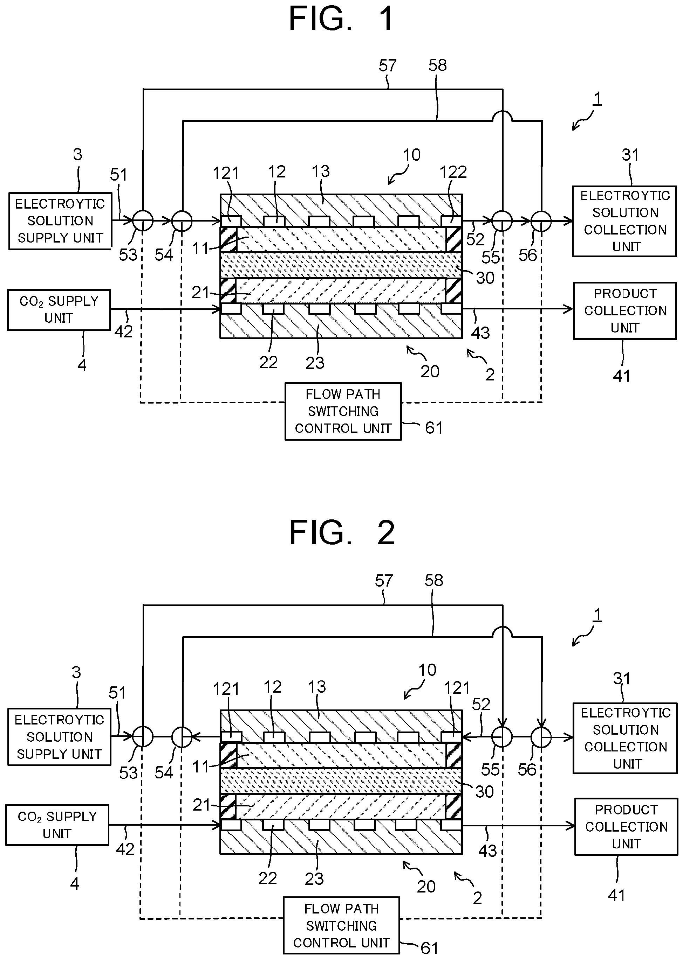

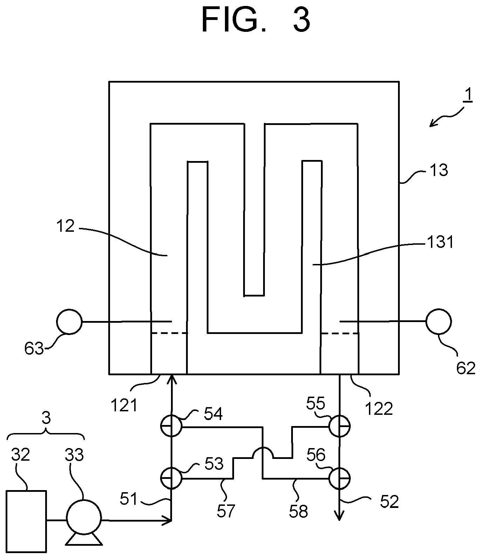

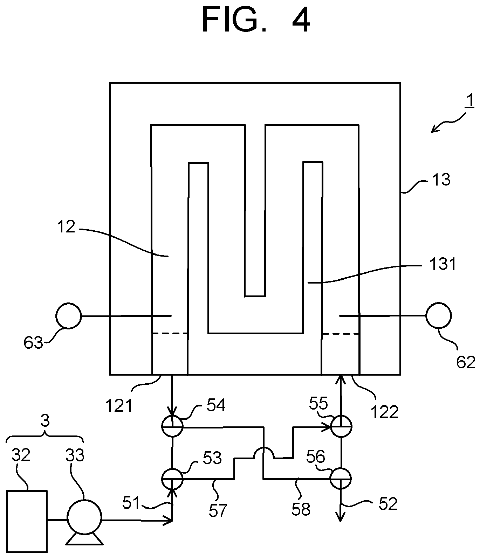

FIG. 1 to FIG. 4 are views each illustrating an electrolytic device of carbon dioxide (CO₂) according to a first embodiment, where FIG. 1 is a sectional view illustrating a first state of the carbon dioxide electrolytic device of the first embodiment, FIG. 2 is a sectional view illustrating a second state of the carbon dioxide electrolytic device of the first embodiment, FIG. 3 is a plan view illustrating a first state of the carbon dioxide electrolytic device on an anode flow path side of the first embodiment, and FIG. 4 is a plan view illustrating a second state of the carbon dioxide electrolytic device on the anode flow path side of the first embodiment. An electrolytic device 1 of carbon dioxide (CO₂) illustrated in each of FIG. 1 to FIG. 4 includes an electrolysis cell 2, an electrolytic solution supply unit 3 that supplies an electrolytic solution as an anode solution to the electrolysis cell 2, and a carbon dioxide supply unit 4 that supplies carbon dioxide (CO₂) gas to the electrolysis cell 2.

The electrolysis cell 2 includes an anode part 10, a cathode part 20, and a separator 30. The anode part 10 includes an anode 11, an anode flow path 12, and an anode flow path plate 13. The cathode part 20 includes a cathode 21, a cathode flow path 22, and a cathode flow path plate 23. The separator 30 is disposed to separate the anode part 10 from the cathode part 20. The electrolysis cell 2 is sandwiched between a pair of current collectors and a pair of support plates, not illustrated, and further tightened with bolts or the like. The anode 11 and the cathode 21 are connected to a power supply that supplies current to them, although not illustrated in FIG. 1 to FIG. 4. The power supply is electrically connected to the anode 11 and the cathode 21 through a current introduction member or other members. The power supply is not limited to a normal system power supply, battery, or the like, but may be a power source that supplies electric power generated by renewable energy such as a solar cell, wind power generation, or geothermal power generation.

The anode 11 is an electrode (oxidation electrode) that causes an oxidation reaction of water (H₂O) or water vapor (H₂O) in the anode solution as the electrolytic solution to produce oxygen (O₂). The anode 11 has a first surface in contact with the separator 30, and a second surface facing the anode flow path 12. The first surface of the anode 11 is in close contact with the separator 30. The anode flow path 12 supplies the anode solution to the anode 11, and is formed of a pit (groove portion/recessed portion) provided in the anode flow path plate 13. The anode solution flows through the inside of the anode flow path 12 to be in contact with the anode 11. The anode flow path plate 13 is in electrical contact with a surface of the anode 11 on a side opposite to the surface that is in contact with the separator 30.

The anode flow path plate 13 is provided with a first opening 121 and a second opening 122 connected to the anode flow path 12, as illustrated in FIG. 3 and FIG. 4. The anode flow path 12 has a serpentine structure, for example, as illustrated in FIG. 3 and FIG. 4. The first opening 121 and the second opening 122 function as a solution introduction port and a solution discharge port in the anode flow path 12, as described below, and the anode solution is introduced from the electrolytic solution supply unit 3 through the first opening 121 or the second opening 122. Furthermore, the anode solution is discharged through the first opening 121 or the second opening 122 and collected in an electrolytic solution collection unit 31. It may be configured such that the anode solution circulates from the electrolytic solution collection unit 31 to the electrolytic solution supply unit 3.

A material having low chemical reactivity and high conductivity is preferably used for the anode flow path plate 13. Examples of such a material include metal materials such as Ti and SUS, carbon materials, and other materials. A plurality of lands (projections) 131 are provided in the anode flow path 12. The lands 131 are provided to form a recess that serves as the anode flow path 12 and to provide mechanical retention and electrical continuity. The lands 131 are preferably provided alternately for uniformizing a flow of the anode solution. Because of the lands 131 as above, the anode flow path 12 meanders. In addition, the lands 131 are preferably provided alternately in the anode flow path 12 also for successfully discharging the anode solution containing oxygen (O₂) gas mixed therein.

The anode 11 is preferably mainly composed of a catalyst material (anode catalyst material) capable of oxidizing water (H₂O) to produce oxygen and hydrogen ions and capable of decreasing an overvoltage in such a reaction. Examples of the anode catalyst material include metals such as platinum (Pt), palladium (Pd), and nickel (Ni), alloys and intermetallic compounds containing the above metals, binary metal oxides such as a manganese oxide (Mn-O), an iridium oxide (Ir-O), a nickel oxide (Ni-O), a cobalt oxide (Co-O), an iron oxide (Fe-O), a tin oxide (Sn-O), an indium oxide (In-O), a ruthenium oxide (Ru-O), a lithium oxide (Li-O), and a lanthanum oxide (La-O), ternary metal oxides such as Ni-Co-O, Ni-Fe-O, La-Co-O, Ni-La-O, and Sr-Fe-O, quaternary metal oxides such as Pb-Ru-Ir-O and La-Sr-Co-O, and metal complexes such as a Ru complex and a Fe complex.

The anode 11 includes a base material having a structure capable of making the anode solution and ions move between the separator 30 and the anode flow path 12, for example, a porous structure such as a mesh material, a punching material, a porous body, or a metal fiber sintered body. The base material may be composed of a metal such as titanium (Ti), nickel (Ni), or iron (Fe), or a metal material such as an alloy (for example, SUS) containing at least one of these metals, or may be composed of the above-described anode catalyst material. When the oxide is used as the anode catalyst material, a catalyst layer is preferably formed by attaching or stacking the anode catalyst material on a surface of the base material made of the above-described metal material. The anode catalyst material may have nanoparticles, a nanostructure, a nanowire, or the like for increasing the oxidation reaction. The nanostructure is a structure in which nanoscale irregularities are formed on a surface of the catalyst material.

The cathode 21 is an electrode (reduction electrode) that causes a reduction reaction of carbon dioxide (CO₂), for example, to produce a carbon compound such as carbon monoxide (CO), methane (CH₄), ethane (C₂H₆), ethylene (C₂H₄), methanol (CH₃OH), ethanol (C₂H₅OH), or ethylene glycol (C₂H₆O₂). In the cathode 21, a side reaction in which hydrogen (H₂) is produced by a reduction reaction of water (H₂O) is caused simultaneously with the reduction reaction of carbon dioxide (CO₂) in some cases. The cathode 21 has a first surface in contact with the separator 30, and a second surface facing the cathode flow path 22.

The cathode flow path 22, which is a flow path of gas containing CO₂ (hereinafter, also referred to as CO₂ gas), is formed of a pit (groove portion/recessed portion) provided in the cathode flow path plate 23. A material having low chemical reactivity and high conductivity is preferably used for the cathode flow path plate 23. Examples of such a material include metal materials such as Ti and SUS, carbon materials, and other materials. The cathode flow path plate 23 is provided with a gas introduction port and discharge port, whose illustration is omitted. CO₂ gas is introduced from the CO₂ supply unit 4 to the cathode flow path 22 through the non-illustrated gas introduction port. Reaction product gases containing CO, H₂, and other gases are discharged from the cathode flow path 22 through a non-illustrated gas discharge port, and the discharged gases are collected in a product collection unit 41. The cathode flow path plate 23 is in electrical contact with a surface of the cathode 21 on a side opposite to the surface that is in contact with the separator 30.

The cathode 21 has a gas diffusion layer and a cathode catalyst layer, for example. Between the gas diffusion layer and the cathode catalyst layer, a porous layer denser than the gas diffusion layer may be disposed. The gas diffusion layer is disposed on the cathode flow path 22 side, and the cathode catalyst layer is disposed on the separator 30 side. The cathode catalyst layer may enter the gas diffusion layer. The cathode catalyst layer preferably has catalyst nanoparticles, a catalyst nanostructure, or the like. The gas diffusion layer is composed of, for example, carbon paper, carbon cloth, or the like, and has been subjected to water-repellent treatment. The cathode catalyst layer is supplied with the electrolytic solution and ions from the anode 11 through the separator 30. In the gas diffusion layer, CO₂ gas is supplied from the cathode flow path 22, and a product of the reduction reaction of the CO₂ gas is discharged. The reduction reaction of CO₂ occurs in the vicinity of a boundary between the gas diffusion layer and the cathode catalyst layer, and a gaseous product is discharged from the cathode flow path 22.

The cathode catalyst layer of the cathode 21 is preferably composed of a catalyst material (cathode catalyst material) capable of reducing CO₂ to produce a carbon compound and capable of decreasing an overvoltage in the above reaction. Examples of the cathode catalyst material include metals such as gold (Au), silver (Ag), copper (Cu), platinum (Pt), palladium (Pd), nickel (Ni), cobalt (Co), iron (Fe), manganese (Mn), titanium (Ti), cadmium (Cd), zinc (Zn), indium (In), gallium (Ga), lead (Pb), and tin (Sn), metal materials such as alloys and intermetallic compounds containing at least one of the above metals, carbon materials such as carbon (C), graphene, CNT (carbon nanotube), fullerene, and ketjen black, and metal complexes such as a Ru complex and a Re complex. The cathode catalyst layer can employ various shapes such as a plate shape, a mesh shape, a wire shape, a particle shape, a porous shape, a thin film shape, and an island shape.

The separator 30 is composed of an ion exchange membrane or the like capable of making the ions and the electrolytic solution move between the anode 11 and the cathode 21, and capable of separating the anode part 10 from the cathode part 20. Examples of the ion exchange membrane include Neosepta (registered trademark) manufactured by ASTOM Corporation, Selemion (registered trademark) and Aciplex (registered trademark) manufactured by ASAHI GLASS CO., LTD., Fumasep (registered trademark) and Fumapem (registered trademark) manufactured by Fumatech, Nafion (registered trademark) being a fluorine resin made by sulfonating and polymerizing tetrafluoroethylene manufactured by Du Pont, lewabrane (registered trademark) manufactured by LANXESS, IONSEP (registered trademark) manufactured by IONTECH, Mustang (registered trademark) manufactured by PALL, RALEX (registered trademark) manufactured by MEGA, Gore-Tex (registered trademark) manufactured by GORE-TEX and so on, for example. However, other than the ion exchange membrane, an insulating porous membrane may be applied to the separator 30, as long as it is a material capable of making ions move between the anode 11 and the cathode 21.

Porous membrane materials include metal oxides, metal hydroxides, metal nitrates, metal sulfates, ceramics, and glass from inorganic materials and polytetrafluoroethylene, polychlorotrifluoroethylene, polyetheretherketone, polyethylene, polyethylene terephthalate, polybutylene terephthalate, cellulose acetate, nitrocellulose, polyphenyl sulfone, polyphenylene sulfide, polysulfone, polyethersulfone, polyacrylonitrile, polyetherimide, polyamideimide, polyvinylidene fluoride, polycarbonate, polyester, polybenzoimidazole, polyarylate, acrylic, nylon, polyolefin, polyurethane, polypropylene, polystyrene from organic materials, and other materials. A combination of each of the materials listed above may also be used.

A solution containing at least water (H₂O) is used for the anode solution as the electrolytic solution. Examples of the solution containing H₂O used as the anode solution include an aqueous solution containing an arbitrary electrolyte. Examples of the aqueous solution containing the electrolyte include an aqueous solution containing at least one selected from a hydroxide ion (OH⁻), a hydrogen ion (H⁺), a potassium ion (K⁺), a sodium ion (Na⁺), a lithium ion (Li⁺), a chloride ion (Cl⁻), a bromide ion (Br⁻), an iodide ion (I⁻), a nitrate ion (NO₃), a sulfate ion (SO₄²⁻), a phosphate ion (PO₄²⁻), a borate ion (BO₃³⁻), a carbonate ion (CO₃²⁻), and a hydrogen carbonate ion (HCO₃⁻), for example. To decrease an electrical resistance of the electrolytic solution, an alkaline solution in which an electrolyte such as a potassium hydroxide or a sodium hydroxide is dissolved in high concentration may be used as the anode solution.

A first pipe 51 is connected to the first opening 121 of the anode flow path 12. A second pipe 52 is connected to the second opening 122 of the anode flow path 12. The first pipe 51 has a first three-way valve 53 as a first switching valve and a second three-way valve 54 as a second switching valve and connects the electrolytic solution supply unit 3 to the first opening 121 through them. The second pipe 52 has a third three-way valve 55 as a third switching valve and a fourth three-way valve 56 as a fourth switching valve and connects the second opening 122 to the electrolytic solution collection unit 31 through them. Furthermore, the first three-way valve 53 and the third three-way valve 55 are connected by a first bypass pipe 57. The second three-way valve 54 and the fourth three-way valve 56 are connected by a second bypass pipe 58. The first bypass pipe 57 and the second bypass pipe 58 form a third pipe. The first pipe 51, the second pipe 52, and the third pipe (57, 58) form an electrolytic solution external flow path.

The first three-way valve 53, the second three-way valve 54, the third three-way valve 55, and the fourth three-way valve 56 form an electrolytic solution (flow path) switching mechanism and are further electrically connected to an electrolytic solution switching control unit 61. The electrolytic solution switching control unit 61 is configured to switch between a first flow in which the anode solution flows from the first opening 121 toward the second opening 122 through the anode flow path 12 and a second flow in which the anode solution flows from the second opening 122 toward the first opening 121 through the anode flow path 12. The switching between the first and second flows is carried out by operations (valve switching operation) of the first three-way valve 53, the second three-way valve 54, the third three-way valve 55, and the fourth three-way valve 56. The concrete operation will be described in detail later. The electrolytic solution supply unit 3 includes an electrolytic solution tank 32 and a pump 33. The anode solution as the electrolytic solution may be configured to circulate by the pump 33 from the electrolytic solution collection unit 31 to the electrolytic solution tank 32 of the electrolytic solution supply unit 3.

The CO₂ supply unit 4 is connected to one opening (third opening) 221 of the cathode flow path 22 through a pipe 42. The product collection unit 41 is connected to the other opening (fourth opening) 222 of the cathode flow path 22 through a pipe 43. CO₂ gas is introduced into the cathode flow path 22 from the CO₂ supply unit 4 from the third opening 221 toward the fourth opening 222.

A working operation of the carbon dioxide electrolytic device 1 of the first embodiment will be described. First, as illustrated in FIG. 1 and FIG. 3, the first three-way valve 53 and the second three-way valve 54 are operated to connect the electrolytic solution supply unit 3 to the first opening 121 of the anode flow path 12, and the third three-way valve 55 and the fourth three-way valve 56 are operated to connect the second opening 122 of the anode flow path 12 to the electrolytic solution collection unit 31. The anode solution is then introduced into the anode flow path 12 through the first opening 121, and the anode solution containing reaction products is discharged from the second opening 122 into the electrolytic solution collection unit 31. At the same time, CO₂ gas is introduced into the cathode flow path 22.

Next, a first process of the electrolysis operation of CO₂ is conducted. In the first process of the CO₂ electrolysis operation, the anode solution is introduced into the anode flow path 12 through the first opening 121 to generate the first flow, while output from the non-illustrated power supply is started to the electrolytic device 1, and a current is supplied by applying a voltage between the anode 11 and the cathode 21. When the current is made to flow between the anode 11 and the cathode 21, an oxidation reaction in the vicinity of the anode 11 and a reduction reaction in the vicinity of the cathode 21 occur, which will be described below. Here, a case of producing carbon monoxide (CO) as the carbon compound is mainly described, but the carbon compound as the reduction product of carbon dioxide is not limited to carbon monoxide and may be the above-described organic carbon compounds such as CH₄, C₂H₆, C₂H₄, CH₃OH, C₂H₅OH, and C₂H₆O₂.

First, when the current is supplied between the anode 11 and the cathode 21 from the power supply, the oxidation reaction of water (H₂O) occurs in the anode 11 that is in contact with the anode solution. As presented in Formula (1) below, H₂O contained in the anode solution is oxidized to produce oxygen (O₂) and hydrogen ions (H⁺).

2H₂O → 4H⁺ + Q₂ + 4e⁻ ... (1)

H⁺ produced in the anode 11 moves in the anode solution existing in the anode 11 and the separator 30, and reaches the vicinity of the cathode 21. The reduction reaction of carbon dioxide (CO₂) occurs by electrons (e⁻) based on the current supplied from the power supply to the cathode 21 and H⁺ moved to the vicinity of the cathode 21. Concretely, as presented in Formula (2) below, CO₂ supplied from the cathode flow path 22 to the cathode 21 is reduced to produce CO.

2CO₂ + 4H⁺ + 4e⁻ → 2CO + 2H₂O ... (2)

In the reaction processes at the anode 11 and the cathode 21 described above, when the reaction to produce CO from CO₂ is continuously carried out, the temperature of the anode solution rises while it passes through the anode flow path 12, and the outlet side of the anode flow path 12 in the electrolysis cell 2 may become hot because heat exchange between the cell and the electrolytic solution does not proceed. The high temperature at the outlet side of the anode flow path 12 may cause damage to the separator 30, the anode 11, and the cathode 21. Therefore, a first thermometer 62 is installed on at least one of the outlet side of the anode flow path 12 and the second pipe 52 to measure the temperature of the anode solution at the outlet side of the anode flow path 12, and according to the measured temperature, the process is changed to a second process using the second flow in which the anode solution flows from the second opening 122 toward the first opening 121 from the first process using the first flow in which the anode solution flows from the first opening 121 toward the second opening 122. The change from the first process to the second process is not limited to be carried out by directly measuring the temperature at the outlet side of the anode flow path 12, but for example, by determining in advance a relationship between an elapsed time of a reaction process based on a flow rate of the anode solution and the temperature at the outlet side of the anode flow path 12, and based on the elapsed time of the reaction process when the temperature at the outlet side is expected to reach the temperature in question.

To change from the first process to the second process described above, first, the supply of the anode solution from the electrolytic solution supply unit 3 is stopped (in some cases, the anode solution supply may not be stopped), then, as illustrated in FIG. 2 and FIG. 4, the first three-way valve 53 is operated to connect the electrolytic solution supply unit 3 to the first bypass pipe 57 and the third three-way valve 55 is operated to connect the first bypass pipe 57 to the second opening 122 of the anode flow path 12. In addition, the second three-way valve 54 is operated to connect the first opening 121 of the anode flow path 12 to the second bypass pipe 58, and the fourth three-way valve 56 is operated to connect the second bypass pipe 58 to the electrolytic solution collection unit 31. By these means, the anode solution flows from the electrolytic solution supply unit 3 to the first bypass pipe 57 through the first three-way valve 53, and then to the anode flow path 12 through the third three-way valve 55 and the second opening 122. In the second process, the anode solution flows from the second opening 122 to the first opening 121 (second flow), opposite to the first process with the first flow.

Next, the second process of the electrolysis operation of CO₂ is conducted. In the second process of the CO₂ electrolysis operation, the anode solution is introduced into the anode flow path 12 through the second opening 122 to generate the second flow, while the current is supplied by applying the voltage between the anode 11 and the cathode 21. An electrolysis process of CO₂ is conducted in the same manner as the first process. Since the anode solution is introduced through the second opening 122, that is, the gas discharge port (outlet) in the first process, the anode solution with a lower temperature is introduced through the second opening 122 into the anode flow path 12 compared to the anode solution that has passed through the anode flow path 12 in the first process. This lowers the temperature at the second opening 122 (the solution discharge port (outlet) in the first process and the solution introduction port (inlet) in the second process) side of the anode flow path 12. Therefore, a partial temperature rise of the anode flow path 12 can be suppressed, and damage to members such as the separator 30 and the electrodes 11 and 21 due to the partial temperature rise of the anode flow path 12, as well as performance degradation, failure, and the like of the electrolysis cell 2 based on such damage, can be prevented, compared to the case where the anode solution is continuously introduced from the first opening 121 to the second opening 122 of the anode flow path 12.

When the second process is continued, the partial temperature rise may occur in the anode flow path 12 on the second opening 122 side, which is the solution introduction port in the second process. To address this point, a second thermometer 63 may be installed on at least one of the outlet (first opening 121) side of the anode flow path 12 and the first pipe 51 to measure the temperature of the anode solution at the outlet side of the anode flow path 12, and the process may be changed from the second process to the first process according to the measured temperature. The first and second processes may be switched sequentially. The first thermometer 62 and the second thermometer 63 form a detection unit and are electrically connected to the electrolytic solution switching control unit 61. The detection unit need only be provided with at least one of the first thermometer 62 and the second thermometer 63.

The above describes a configuration in which the first and second processes are switched based on the detection unit including the thermometer that measures the temperature at the outlet side of the anode flow path 12, but the configuration is not limited thereto. The detection unit that detects the state of the anode flow path 12 may be, for example, a pressure sensor, a gas concentration meter, a flow meter, a conductivity meter, a pH sensor, or the like. Since the pressure sensor, the gas concentration meter, and the like indicate the state of the separator 30, the pressure and gas concentration of the anode flow path 12 can be measured to detect the state or the like of the separator 30. Since the flow rate of the anode solution indicates the state of the anode flow path 12, the state of the separator 30, or the like can be detected by measuring the flow rate of the anode flow path 12. The same applies to the conductivity and pH of the anode solution. The detection unit as described above may be used to switch between the first and second processes. Furthermore, the detection unit as described above may also be disposed in the cathode flow path.

In the CO₂ electrolytic device 1 illustrated in FIG. 1 to FIG. 4, the cathode part 20 has the cathode flow path 22 and is configured to allow CO₂ gas to flow through from one opening 221 to the other opening 222 of the cathode flow path 22. When the cathode flow path 22 has the serpentine structure similar to the anode flow path 12 illustrated in FIG. 3 and FIG. 4, and CO₂ gas flows from the left side of the paper in FIG. 1 to the right side of the paper, for example, the CO₂ gas flows in the same direction as the anode solution in the first process. In contrast, in the second process, the CO₂ gas flows in the opposite direction to the anode solution. The CO₂ electrolytic reaction efficiency is almost the same whether the CO₂ gas and the anode solution flow in the same direction or the opposite direction. Therefore, there is no possibility to decrease the electrolytic reaction efficiency of CO₂ by changing the first and second processes.

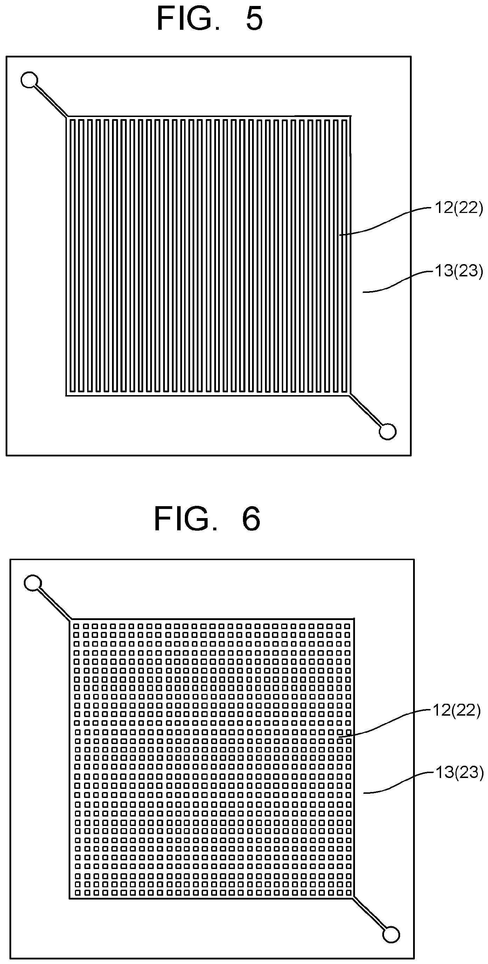

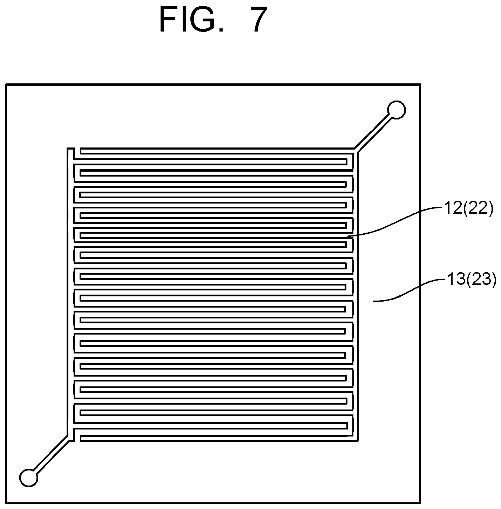

The anode flow path 12 and cathode flow path 22 have serpentine flow paths (serpentine structure) illustrated in FIG. 3 and FIG. 4, for example. However, the flow path structure is not limited to this and may be a parallel flow path illustrated in FIG. 5, a grid flow path illustrated in FIG. 6, a dead-end flow path illustrated in FIG. 7, or other structures, and the structure is not limited. The parallel flow path illustrated in FIG. 5 has a structure without folded portions, in which a plurality of parallel flow paths are connected orthogonally to flow paths provided in parallel at both ends. The grid flow path illustrated in FIG. 6 has a structure in which a plurality of flow paths are connected in an orthogonal direction to flat flow paths provided on both top and bottom surfaces. The dead-end flow path illustrated in FIG. 7 has a structure in which a dead-end flow path is connected from flow paths provided in parallel at both ends to flow paths on an opposite side, respectively.

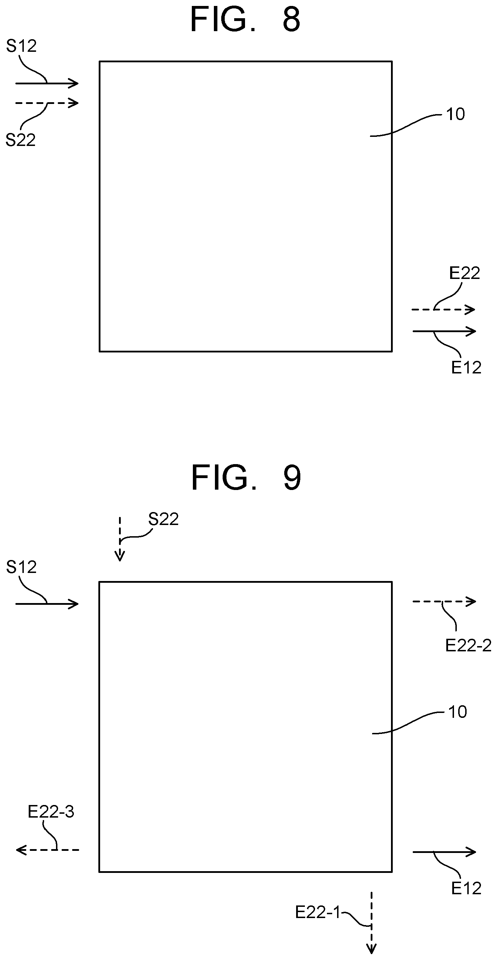

Furthermore, the flow path structures of the anode flow path 12 and cathode flow path 22 may be identical or different. For smooth ion exchange associated with electrode reactions, the anode flow path 12 and cathode flow path 22 preferably have mirror-matched flow path patterns. Regarding a shape of the anode flow path 12 and cathode flow path 22, for example, as illustrated in FIG. 8, flow path inlets for the anode solution and CO₂ gas may be provided at the same location, and flow path outlets for the anode solution and CO₂ gas may be provided at the same location. In FIG. 8, an arrow S12 indicates an inlet direction of the anode solution into the anode flow path 12, an arrow S22 indicates an inlet direction of the CO₂ gas into the cathode flow path 22, an arrow E12 indicates an outlet direction of the anode solution from the anode flow path 12, and an arrow E22 indicates an outlet direction of the CO₂ gas from the cathode flow path 22.

The flow path inlets for the anode solution and CO₂ gas may be provided at different locations, as illustrated in FIG. 9. In that case, the flow path inlets for the anode solution and CO₂ gas may be on a diagonal line or at positions where extensions are orthogonal to each other. In FIG. 9, arrows E22-1, E22-2, and E22-3 each indicate an outlet direction of the CO₂ gas from the cathode flow path 22. Furthermore, the CO₂ gas and anode solution may be parallel flows flowing in the same direction or counterflows flowing in opposite directions. The structure of the anode flow path 12 and cathode flow path 22, the flow directions of the anode solution and CO₂ gas, and the like are the same in other embodiments described below.

The CO₂ electrolytic device 1 may include an electrolysis cell stack stacking a plurality of electrolysis cells 2. When the CO₂ electrolytic device 1 includes the electrolysis cell stack stacking the plurality of electrolysis cells 2, the first and second processes may be changed for the plurality of electrolysis cells 2 in a batch by providing the aforementioned flow path switching mechanism and bypass pipes in an integrated supply system that supplies the anode solution to each of the plurality of electrolysis cells 2 and an integrated discharge system that discharges the anode solution from each of the plurality of electrolysis cells 2. It is also possible to change the first and second processes individually by providing the detection unit and the flow path switching mechanism for each of the plurality of electrolysis cells 2.

### (Second Embodiment)

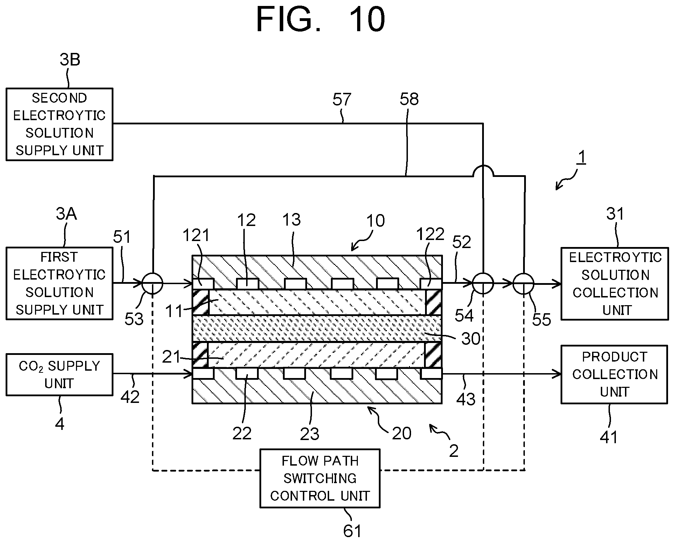

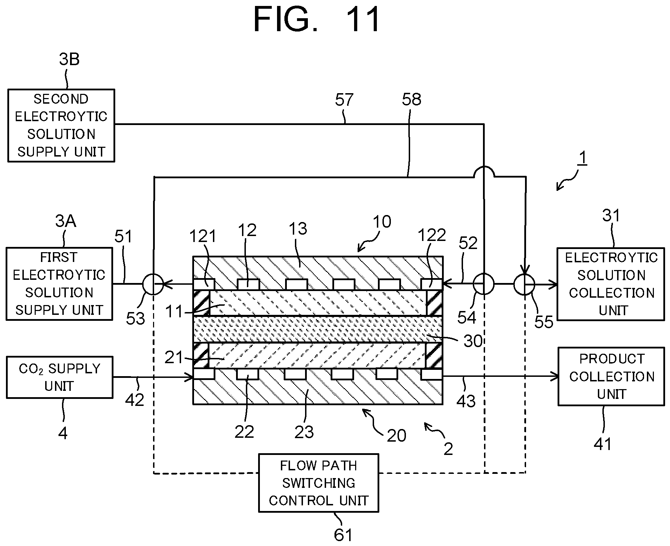

Next, the carbon dioxide electrolytic device according to a second embodiment is described while referring to FIG. 10 and FIG. 11. Here, differences between the electrolytic device 1 according to the second embodiment and the electrolytic device 1 according to the first embodiment will be explained mainly. A structure, composing materials, and the like of the electrolysis cell 2 in the second embodiment are the same as those of the electrolysis cell 2 in the first embodiment, and the second embodiment is basically the same as the first embodiment, except for the parts described the differences below in detail.

The electrolytic device 1 of the second embodiment includes a first electrolytic solution supply unit 3A and a second electrolytic solution supply unit 3B. The first electrolytic solution supply unit 3A is connected to the first opening 121 of the anode flow path 12 through the first pipe 51. The first pipe 51 has the first three-way valve 53 as the first switching valve. The second pipe 52 is connected to the second opening 122 of the anode flow path 12. The second pipe 52 has the second three-way valve 54 as the second switching valve and the third three-way valve 55 as the third switching valve, through which the second opening 122 is connected to the electrolytic solution collection unit 31.

The second electrolytic solution supply unit 3B is connected to the second three-way valve 54 through the first bypass pipe 57. Furthermore, the third three-way valve 55 is connected to the first three-way valve 53 through the second bypass pipe 58. The first three-way valve 53, the second three-way valve 54, and the third three-way valve 55 form the flow path switching mechanism and are further electrically connected to the electrolytic solution switching control unit 61. The first bypass pipe 57 and the second bypass pipe 58 form the third pipe.

The electrolytic solution switching control unit 61 is configured to control switching of the first flow in which the anode solution supplied from the first electrolytic solution supply unit 3A flows from the first opening 121 toward the second opening 122 through the anode flow path 12 and the second flow in which the anode solution supplied from the second electrolytic solution supply unit 3B flows from the second opening 122 toward the first opening 121 through the anode flow path 12. The switching between the first and second flows is carried out by the operations of the first and second electrolytic solution supply units 3A and 3B, and the operations of the first three-way valve 53, the second three-way valve 54, and the third three-way valve 55 (valve switching operation). Concrete operations are detailed below.

A working operation of the carbon dioxide electrolytic device 1 of the second embodiment will be described. First, as illustrated in FIG. 10, the first three-way valve 53 is operated to connect the first electrolytic solution supply unit 3Ato the first opening 121 of the anode flow path 12, and the second and third three-way valves 54 and 55 are operated to connect the second opening 122 of the anode flow path 12 to the electrolytic solution collection unit 31. The anode solution supplied from the first electrolytic solution supply unit 3A is then introduced into the anode flow path 12 through the first opening 121, and the anode solution containing reaction products is discharged from the second opening 122 into the electrolytic solution collection unit 31. At the same time, CO₂ gas is introduced into the cathode flow path 22.

The first three-way valve 53, the second three-way valve 54, the third three-way valve 55, and the fourth three-way valve 56 form an electrolytic solution (flow path) switching mechanism and are further electrically connected to an electrolytic solution switching control unit 61. The electrolytic solution switching control unit 61 is configured to switch between a first flow in which the anode solution flows from the first opening 121 toward the second opening 122 through the anode flow path 12 and a second flow in which the anode solution flows from the second opening 122 toward the first opening 121 through the anode flow path 12. The switching between the first and second flows is carried out by operations (valve switching operation) of the first three-way valve 53, the second three-way valve 54, the third three-way valve 55, and the fourth three-way valve 56. The concrete operation will be described in detail later. The electrolytic solution supply unit 3 includes the electrolytic solution tank 32 and the pump 33.

Next, the first process of the CO₂ electrolysis operation is conducted. In the first process of the CO₂ electrolysis operation, the anode solution is introduced into the anode flow path 12 through the first opening 121 to generate the first flow, while the output from the non-illustrated power supply is started in the electrolytic device 1 and the current is supplied by applying the voltage between the anode 11 and the cathode 21. When the current is applied between the anode 11 and the cathode 21, the oxidation reaction in the vicinity of the anode 11 and the reduction reaction in the vicinity of the cathode 21 occur, as described in the first embodiment. Here, the case where carbon monoxide (CO) is generated as the carbon compound is mainly described, but the carbon compound as the reduction product of carbon dioxide is not limited to carbon monoxide, but can also be the organic carbon compound such as CH₄, C₂H₆, C₂H₄, CH₃OH, C₂H₅OH, C₂H₆O₂, or other compounds as mentioned above. The concrete reactions are as described in the first embodiment and are omitted here in detail.

In the reaction processes at the anode 11 and the cathode 21, when the reaction to produce CO from CO₂ is continuously carried out, the temperature of the anode solution rises while it passes through the anode flow path 12, and the outlet side of the anode flow path 12 in the electrolysis cell 2 may become hot. The high temperature at the outlet side of the anode flow path 12 may cause damage to the separator 30. Therefore, a thermometer (not illustrated) is installed on at least one of the outlet side of the anode flow path 12 and the second pipe 52, and according to the temperature at the outlet side of the anode flow path 12, the process is changed from the first process using the first flow in which the anode solution flows from the first opening 121 toward the second opening 122 to the second process using the second flow in which the anode solution flows from the second opening 122 toward the first opening 121. The change from the first process to the second process is not limited to be carried out by directly measuring the temperature at the outlet side of the anode flow path 12, but for example, by determining in advance the relationship between the elapsed time of the reaction process based on the flow rate of the anode solution and the temperature at the outlet side of the anode flow path 12, and based on the elapsed time of the reaction process when the temperature at the outlet side is expected to reach the temperature in question.

To change from the first process to the second process described above, first, the supply of the anode solution from the first electrolytic solution supply unit 3A is stopped, then, as illustrated in FIG. 11, the first three-way valve 53 is operated to connect the first opening 121 of the anode flow path 12 to the second bypass pipe 58, and the third three-way valve 55 is operated to connect the second bypass pipe 58 to the electrolytic solution collection unit 31. In addition, the second three-way valve 54 is operated to connect the second opening 122 of the anode flow path 12 to the first bypass pipe 57. By these means, the anode solution flowing from the second electrolytic solution supply unit 3B to the first bypass pipe 57 flows to the anode flow path 12 through the second three-way valve 54 and the second opening 122. In the second process, the anode solution flows from the second opening 122 toward the first opening 121 (second flow), opposite to the first process with the first flow.

Next, the second process of the CO₂ electrolysis operation is conducted. In the second process of the CO₂ electrolysis operation, the anode solution is introduced into the anode flow path 12 through the second opening 122 to generate the second flow, while the current is supplied by applying the voltage between the anode 11 and the cathode 21. The CO₂ electrolysis process is conducted in the same manner as in the first process. In this process, the anode solution is introduced through the second opening 122, that is, the gas discharge port (outlet) in the first process, so that the anode solution with a lower temperature than the anode solution that has passed through the anode flow path 12 in the first process is introduced into the anode flow path 12 through the second opening 122. This lowers the temperature at the second opening 122 (the gas discharge port (outlet) in the first process and the gas introduction port (inlet) in the second process) side of the anode flow path 12. Therefore, compared to the case where the anode solution is continuously introduced from the first opening 121 to the second opening 122 of the anode flow path 12, the partial temperature rise of the anode flow path 12 can be suppressed, and damage to the separator 30 due to the partial temperature rise of the anode flow path 12, as well as performance degradation, failure, and the like of the electrolysis cell 2 based on such damage can be prevented.

In the electrolytic device 1 of the second embodiment, as in the first embodiment, the second process may be changed to the first process depending on the temperature of at least one of the outlet side of the anode flow path 12 and the first pipe 51 as same as the first embodiment. The first and second processes may be switched sequentially. As in the first embodiment, the detection unit for detecting the temperature needs to include at least one of the first thermometer disposed on the second opening 122 side and the second thermometer disposed on the first opening 121 side. The timing of switching between the first and second processes is preferably carried out by detecting the state of the anode flow path 12 by the detection unit including at least one of a thermometer, a pressure sensor, a gas concentration meter, a flow meter, a conductivity meter, and a pH sensor provided in at least one of the openings at both ends of the anode flow path 12 and the pipes connected thereto based on the detection results.

### (Third Embodiment)

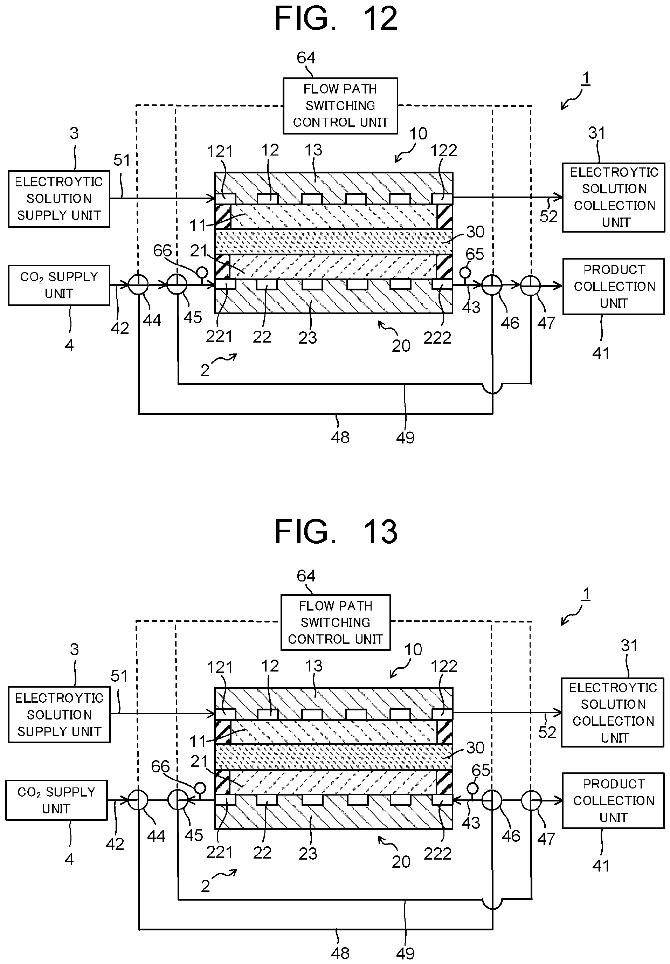

Next, the carbon dioxide electrolytic device according to a third embodiment is described while referring to FIG. 12 and FIG. 13. Here, differences between the electrolytic device 1 according to the third embodiment and the electrolytic device 1 according to the first embodiment will be explained mainly. A structure, composing materials, and the like of the electrolysis cell 2 in the third embodiment are the same as those of the electrolysis cell 2 in the first embodiment, and the third embodiment is basically the same as the first embodiment, except for the parts described the differences below in detail. In the electrolytic device 1 according to the first embodiment, the anode solution flow is configured to be switchable between the first and second flows, while in the electrolytic device 1 according to the third embodiment, the CO₂ gas flow is configured to be switchable between the third and fourth flows. The electrolytic device 1 according to the third embodiment is described in detail below.

In the electrolytic device 1 of the third embodiment, the cathode flow path (CO₂ gas flow path) 22 has one opening (third opening) 221 and the other opening (fourth opening) 222. The fourth pipe 42 is connected to the third opening 221 of the CO₂ gas flow path. The fifth pipe 43 is connected to the fourth opening 222 of the cathode flow path 22. The fourth pipe 42 has a fifth three-way valve 44 as a fifth switching valve and a sixth three-way valve 45 as a sixth switching valve and connects the CO₂ supply unit 4 to the third opening 221 through them. The fifth pipe 43 has a seventh three-way valve 46 as a seventh switching valve and an eighth three-way valve 47 as an eighth switching valve and connects the fourth opening 222 to the product collection unit 41 through them. Furthermore, the fifth three-way valve 44 and the seventh three-way valve 46 are connected by a third bypass pipe 48. The sixth three-way valve 45 and the eighth three-way valve 47 are connected by a fourth bypass pipe 49. The third bypass pipe 48 and the fourth bypass pipe 49 form a sixth pipe. The fourth pipe 42, the fifth pipe 43, and the sixth pipe (48, 49) form a CO₂ external flow path.

The fifth three-way valve 44, the sixth three-way valve 45, the seventh three-way valve 46, and the eighth three-way valve 47 form a CO₂ (flow path) switching mechanism and are further electrically connected to a CO₂ (flow path) switching control unit 64. The CO₂ switching control unit 64 is configured to switch between a third flow in which the CO₂ gas flows from the third opening 221 toward the fourth opening 222 through the cathode flow path 22 and a fourth flow in which the CO₂ gas flows from the fourth opening 222 toward the third opening 221 through the cathode flow path 22. The switching between the third and fourth flows is carried out by operations (valve switching operation) of the fifth three-way valve 44, the sixth three-way valve 45, the seventh three-way valve 46, and the eighth three-way valve 47.

A working operation of the carbon dioxide electrolytic device 1 of the third embodiment will be described. First, as illustrated in FIG. 12, the fifth and sixth three-way valves 44 and 45 are operated to connect the CO₂ supply unit 4 to the third opening 221 of the cathode flow path 22, and the seventh and eighth three-way valves 46 and 47 are operated to connect the fourth opening 222 of the cathode flow path 22 to the product collection unit 41. The CO₂ gas is then introduced into the cathode flow path 22 through the third opening 221, and reaction product gas containing unreacted CO₂ gas is discharged from the fourth opening 222 to the product collection unit 41. At the same time, the anode solution is introduced into the anode flow path 12. In this case, the anode solution may simply flow from the first opening 121 to the second opening 122 of the anode flow path 12, or the first and second flows may be switched as illustrated in the first embodiment.

Next, a first process of the electrolysis operation of CO₂ is conducted. In the first process of the CO₂ electrolysis operation, the CO₂ gas is introduced into the cathode flow path 22 through the third opening 221 to generate the third flow, while output from the non-illustrated power supply is started to the electrolytic device 1, and a current is supplied by applying a voltage between the anode 11 and the cathode 21. When the current is made to flow between the anode 11 and the cathode 21, the oxidation reaction in the vicinity of the anode 11 and the reduction reaction in the vicinity of the cathode 21 occur. Here, a case of producing carbon monoxide (CO) as the carbon compound is mainly described, but the carbon compound as the reduction product of carbon dioxide is not limited to carbon monoxide and may be the above-described organic carbon compounds such as CH₄, C₂H₆, C₂H₄, CH₃OH, C₂H₅OH, and C₂H₆O₂. The oxidation and reduction reactions at the anode 11 and the cathode 21 were described in detail in the first embodiment, so the descriptions are omitted here.

In the reaction processes at the anode 11 and the cathode 21, when the reaction to produce CO from CO₂ is continuously carried out, contamination of O₂ into the cathode flow path 22 may occur due to crossover of gases produced in the anode flow path 12. As a result, the reduction reaction of O₂ gas may proceed on the cathode 21. When hydrogen peroxide (H₂O₂) is generated in the process, this species may cause damage to the electrodes (11, 21) and the separator 30. Furthermore, when the generated hydrogen peroxide reacts with some metal species to produce radical species with strong oxidizing power, more damage can occur. The above damage is more pronounced on a latter part side of the cathode flow path 22, where the CO₂ reduction reaction is more advanced. This is because the O₂ concentration in the anode flow path 12 becomes larger in the latter part of the flow path and crossover is more likely to occur. Therefore, a gas concentration meter (first gas concentration meter) 65 is installed on at least one of the outlet sides of the anode flow path 12 and cathode flow path 21 to detect damage to the components of the electrolysis cell 2, and according to the measured values, the process is changed from the first process using the third flow in which the CO₂ gas flows from the third opening 221 toward the fourth opening 222 to the second process using the fourth flow in which the CO₂ gas flows from the fourth opening 222 toward the third opening 221. The change from the first process to the second process is not limited to be carried out by directly measuring the gas concentration at the outlet side of the flow path, but for example, based on the elapsed time of the reaction process that is predicted to reach the gas concentration value in question in advance.

To change from the first process to the second process described above, first, the supply of the CO₂ gas from the CO₂ supply unit 4 is stopped (in some cases, it is not necessary to stop the CO₂ supply), then, as illustrated in FIG. 13, the fifth three-way valve 44 is operated to connect the CO₂ supply unit 4 to the third bypass pipe 48, and the seventh three-way valve 46 is operated to connect the third bypass pipe 48 to the fourth opening 222 of the cathode flow path 22. In addition, the sixth three-way valve 45 is operated to connect the third opening 221 of the cathode flow path 22 to the fourth bypass pipe 49, and the eighth three-way valve 47 is operated to connect the fourth bypass pipe 49 to the product collection unit 41. By these means, the CO₂ gas flows from the CO₂ supply unit 4 to the third bypass pipe 48 through the fifth three-way valve 44 and flows to the cathode flow path 22 through the seventh three-way valve 46 and the fourth opening 222. In the second process, the CO₂ gas flows from the fourth opening 222 toward the third opening 221 (fourth flow), opposite to the first process with the third flow.

Next, the second process of the CO₂ electrolysis operation is conducted. In the second process of the CO₂ electrolysis operation, the CO₂ gas is introduced into the cathode flow path 22 through the fourth opening 222 to generate the fourth flow, while the current is supplied by applying the voltage between the anode 11 and the cathode 21. The CO₂ electrolysis process is conducted in the same manner as in the first process. In this process, the CO₂ gas is introduced through the fourth opening 222, that is, the gas discharge port (outlet) in the first process, so that the CO₂ gas with a higher concentration than the CO₂ that has passed through the cathode flow path 22 in the first process is introduced into the cathode flow path 22 through the fourth opening 222. This lowers the pH at the fourth opening 222 of the cathode flow path 22, that is, the gas discharge port (outlet) in the first process and the CO₂ introduction port (inlet) in the second process side. Therefore, compared to the case where the CO₂ is continuously introduced from the third opening 221 to the fourth opening 222 of the cathode flow path 22, the partial pH rise of the cathode flow path 22 can be suppressed, and damage to the electrodes (11, 21) and the separator 30, as well as performance degradation, failure, and the like of the electrolysis cell 2 based on such damage can be prevented.

When the second process is continuously carried out, there is a risk of partial hydrogen peroxide and radical species increase in the cathode flow channel 22 on the fourth opening 222 side, which is the outlet of cathode products in the second process. To address this point, a gas concentration meter (second gas concentration meter) 66 may be installed on at least one of the outlet (third opening 221) side of the cathode flow path 22 and the fourth pipe 42, and the process may be changed from the second process to the first process according to the measurement results. The first and second processes may be switched sequentially. The first and second gas concentration meters constitute a detection unit and are electrically connected to the CO₂ switching control unit 64. The detection unit needs only be equipped with at least one of the first gas concentration meter and the second gas concentration meter.

The above describes a configuration in which the first and second processes are switched based on a detection unit equipped with a concentration meter that measures the gas concentration at the outlet side of the cathode flow path 22, but the configuration is not limited thereto. The detection unit that detects the state of the cathode flow path 22 may be, for example, a pressure sensor, a thermometer, a flow meter, or the like. The pressure sensor can indicate the state of damage to the separator 30, while the thermometer and flow meter can detect the state of the cathode and anode. The above detection unit may be used to switch between the first and second processes. In addition, the detection unit as described above may also be disposed in the anode flow path 12 to switch to the cathode flow path 22 side.

When the CO₂ electrolytic device 1 includes an electrolysis cell stack stacking a plurality of electrolysis cells 2, the first and second processes may be changed for the plurality of electrolysis cells 2 in a batch by providing the aforementioned flow path switching mechanism and bypass pipes in an integrated supply system that supplies the CO₂ gas to each of the plurality of electrolysis cells 2 and an integrated discharge system that discharges the product from each of the plurality of electrolysis cells 2. It is also possible to change the first and second processes individually by providing the detection unit and the flow path switching mechanism for each of the plurality of electrolysis cells 2.

Furthermore, the CO₂ electrolytic device 1 may include both the cathode-side flow path switching mechanism and the anode-side flow path switching mechanism. In this case, it is preferable because switching can be carried out according to the state (switching factor) of the electrolysis cell 2. The first process on the cathode side and the first process on the anode side may be parallel flow, where both the electrolytic solution and CO₂ gas flow from the same direction, or they may be counter flow, where they flow in opposite directions. Although the drawing illustrates a general serpentine-type flow path, the flow path structure is not limited to this pattern but may be other patterns as described above. For example, the parallel flow path illustrated in FIG. 5, the grid flow path illustrated in FIG. 6, the dead-end flow path illustrated in FIG. 7, and other structures may be used, and the structure is not limited. Furthermore, with regard to the shape of the anode flow path 12 and cathode flow path 22, the anode solution and CO₂ gas flow path inlets may be provided at the same location and the anode solution and CO₂ gas flow path outlets at the same location, or the anode solution and CO₂ gas flow path inlets may be provided at different locations. In such a case, the flow path inlets may be on a diagonal line or at locations where extension lines are orthogonal to each other.

### (Fourth Embodiment)

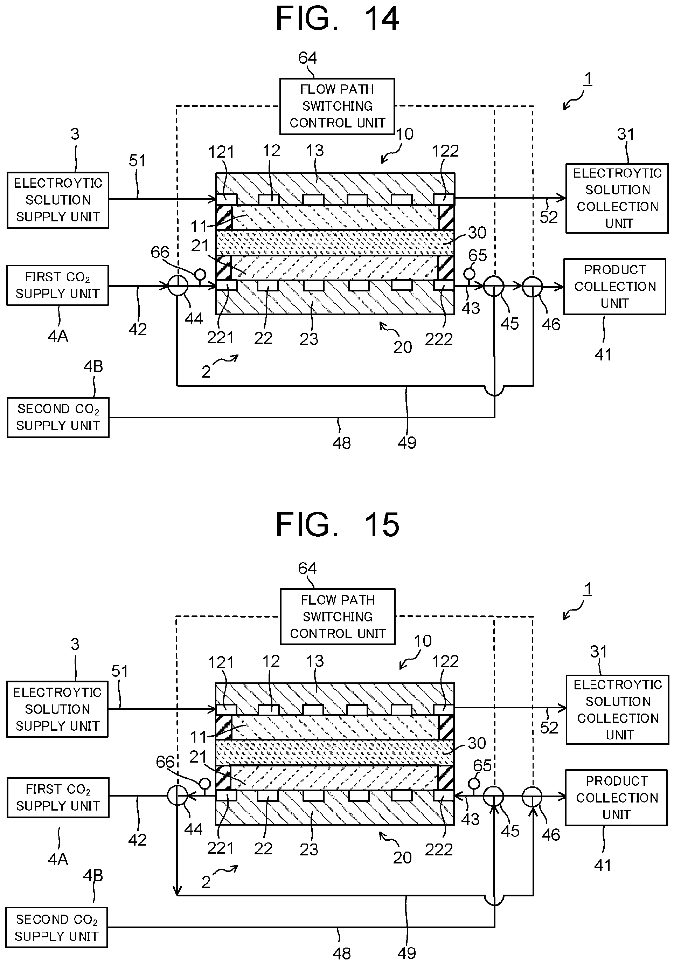

Next, the carbon dioxide electrolytic device according to a fourth embodiment is described while referring to FIG. 14 and FIG. 15. Here, differences between the electrolytic device 1 according to the fourth embodiment and the electrolytic device 1 according to the second embodiment will be explained mainly. A structure, composing materials, and the like of the electrolysis cell 2 in the fourth embodiment are the same as those of the electrolysis cell 2 in the first embodiment, and the fourth embodiment is basically the same as the first embodiment, except for the parts described the differences below in detail.

The electrolytic device 1 of the fourth embodiment includes a first CO₂ supply unit 4A and a second CO₂ supply unit 4B. The first CO₂ supply unit 4A is connected to the third opening 221 of the cathode flow path 22 through the fourth pipe 42. The fourth pipe 42 has the fifth three-way valve 44 as the fifth switching valve. The fifth pipe 43 is connected to the fourth opening 222 of the cathode flow path 22. The fifth pipe 43 has the sixth three-way valve 45 as the sixth switching valve and the seventh three-way valve 46 as the seventh switching valve and connects the fourth opening 222 to the product collection unit 41 through them.

The second CO₂ supply unit 4B is connected to the sixth three-way valve 45 through the first bypass pipe 48. Furthermore, the seventh three-way valve 46 is connected to the fifth three-way valve 44 through the second bypass pipe 49. The fifth three-way valve 44, the sixth three-way valve 45, and the seventh three-way valve 46 constitute the CO₂ (flow path) switching mechanism and are further electrically connected to the CO₂ switching control unit 64. The first bypass pipe 48 and the second bypass pipe 49 constitute the third pipe.

The CO₂ switching control unit 64 is configured to switch between the third flow in which the CO₂ gas supplied from the first CO₂ supply unit 4A flows from the third opening 221 toward the fourth opening 222 through the cathode flow path 22 and the fourth flow in which the CO₂ gas supplied from the second CO₂ supply unit 4B flows from the fourth opening 222 toward the third opening 221 through the cathode flow path 22. The switching between the third and fourth flows is carried out by operations of the first CO₂ supply unit 4A and the second CO₂ supply unit 4B and operations (valve switching operation) of the fifth three-way valve 44, the sixth three-way valve 45, and the seventh three-way valve 46.

A working operation of the carbon dioxide electrolytic device 1 of the fourth embodiment will be described. First, as illustrated in FIG. 14, the fifth three-way valve 44 is operated to connect the first CO₂ supply unit 4A to the third opening 221 of the cathode flow path 22, and the sixth and seventh three-way valves 45 and 46 are operated to connect the fourth opening 222 of the cathode flow path 22 to the product collection unit 41. The CO₂ gas supplied from the first CO₂ supply unit 4Ais then introduced into the cathode flow path 22 through the third opening 221, and reaction product gas (CO gas, or other gases) containing unreacted CO₂ gas is discharged from the fourth opening 222 to the product collection unit 41. At the same time, the anode solution is introduced into the anode flow path 12.

The fifth three-way valve 44, the sixth three-way valve 45, and the seventh three-way valve 46 constitute the CO₂ (flow path) switching mechanism and are further electrically connected to the CO₂ switching control unit 64. The CO₂ switching control unit 64 is configured to switch between the third flow in which the CO₂ gas flows from the third opening 221 toward the fourth opening 222 through the cathode flow path 22 and the fourth flow in which the CO₂ gas flows from the fourth opening 222 toward the third opening 221 through the cathode flow path 22. The switching between the third and fourth flows is carried out by operations (valve switching operation) of the fifth three-way valve 44, the sixth three-way valve 45, and the seventh three-way valve 46.

Next, a first process of the electrolysis operation of CO₂ is conducted. In the first process of the CO₂ electrolysis operation, the CO₂ gas is introduced into the cathode flow path 22 through the third opening 221 to generate the third flow, while output from the non-illustrated power supply is started to the electrolytic device 1, and a current is supplied by applying a voltage between the anode 11 and the cathode 21. When the current is made to flow between the anode 11 and the cathode 21, the oxidation reaction in the vicinity of the anode 11 and the reduction reaction in the vicinity of the cathode 21 occur, as described in the first embodiment. Here, a case of producing carbon monoxide (CO) as the carbon compound is mainly described, but the carbon compound as the reduction product of carbon dioxide is not limited to carbon monoxide and may be the above-described organic carbon compounds such as CH₄, C₂H₆, C₂H₄, CH₃OH, C₂H₅OH, and C₂H₆O₂. Concrete reactions are as described in the first embodiment, so the descriptions are omitted here.

In the reaction processes at the anode 11 and the cathode 21, when the reaction to produce CO from CO₂ is continuously carried out, contamination of O₂ into the cathode flow path 22 may occur due to crossover of gases produced in the anode flow path 12, as described above. As a result, the reduction reaction of O₂ gas may proceed on the cathode 21. When hydrogen peroxide (H₂O₂) is generated in the process, this species may cause damage to the electrodes (11, 21) and the separator 30. Furthermore, when the generated hydrogen peroxide reacts with some metal species to produce radical species with strong oxidizing power, more damage can occur. The above damage is more pronounced on a latter part side of the cathode flow path 22, where the CO₂ reduction reaction progresses and the CO₂ concentration decreases. This is because the O₂ concentration in the anode flow path 12 becomes larger in the latter part of the flow path and crossover is more likely to occur. Therefore, a gas concentration meter (first gas concentration meter) 65 is installed on at least one of the outlet sides of the anode flow path 12 and cathode flow path 21 to detect damage to the components of the electrolysis cell 2, and according to the measured values, the process is changed from the first process using the third flow in which the CO₂ gas flows from the third opening 221 toward the fourth opening 222 to the second process using the fourth flow in which the CO₂ gas flows from the fourth opening 222 toward the third opening 221. The change from the first process to the second process is not limited to be carried out by directly measuring the gas concentration at the outlet side of the flow path, but for example, based on the elapsed time of the reaction process that is predicted to reach the gas concentration value in question in advance.

To change from the first process to the second process described above, first, the supply of the CO₂ gas from the first CO₂ supply unit 4A is stopped, then, as illustrated in FIG. 15, the fifth three-way valve 44 is operated to connect the third opening 221 of the cathode flow path 22 to the second bypass pipe 49, and the seventh three-way valve 46 is operated to connect the second bypass pipe 49 to the product collection unit 41. In addition, the sixth three-way valve 45 is operated to connect the fourth opening 222 of the cathode flow path 22 to the first bypass pipe 48. By these means, the CO₂ gas flowing from the second CO₂ supply unit 4B to the first bypass pipe 48 flows to the cathode flow path 22 through the sixth three-way valve 45 and the fourth opening 222. In the second process, the CO₂ gas flows from the fourth opening 222 toward the third opening 221 (fourth flow), opposite to the first process with the third flow.

Next, the second process of the CO₂ electrolysis operation is conducted. In the second process of the CO₂ electrolysis operation, the CO₂ gas is introduced into the cathode flow path 22 through the fourth opening 222 to generate the fourth flow, while the current is supplied by applying the voltage between the anode 11 and the cathode 21. The CO₂ electrolysis process is conducted in the same manner as in the first process. In this process, the CO₂ gas is introduced through the fourth opening 222, that is, the gas discharge port (outlet) in the first process, so that the CO₂ gas with a higher CO₂ concentration than the CO₂ that has passed through the cathode flow path 22 in the first process is introduced into the cathode flow path 22 through the fourth opening 222. This lowers the pH at the fourth opening 222 of the cathode flow path 22, that is, the gas discharge port (outlet) in the first process and the CO₂ introduction port (inlet) in the second process side. Therefore, compared to the case where the CO₂ is continuously introduced from the third opening 221 to the fourth opening 222 of the cathode flow path 22, the partial pH rise of the cathode flow path 22 can be suppressed, and damage to the electrodes (11, 21) and the separator 30, as well as performance degradation, failure, and the like of the electrolysis cell 2 based on such damage can be prevented.

In the electrolytic device 1 of the fourth embodiment, as in the third embodiment, the second process can be changed to the first process depending on the gas concentration and pH of at least one of the outlet side of the cathode flow channel 22 and the first pipe 42. The first and second processes may be switched sequentially. The detection unit for detecting the gas concentration can be at least one of the first gas concentration meter 65 disposed on the fourth opening 222 side and the second gas concentration meter 66 disposed on the third opening 221 side, as in the third embodiment. The timing for switching between the first and second processes is preferably based on the detection of the state of the cathode flow path 22 by a detection unit equipped with at least one of a gas concentration meter, pH meter, pressure sensor, thermometer, and flow meter installed in the openings at both ends of the cathode flow path 22 and at least one of the pipes connected thereto, and based on the detection results

### (Fifth Embodiment)

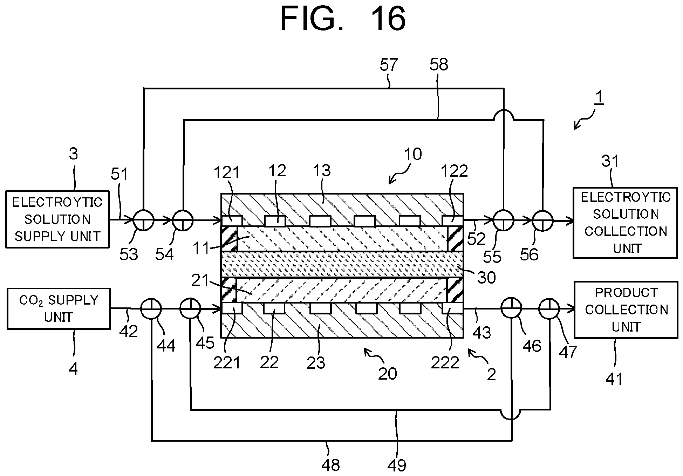

Next, the carbon dioxide electrolytic device according to a fifth embodiment is described while referring to FIG. 16. In the carbon dioxide electrolytic device 1 of the fifth embodiment, the anode-side external flow path (electrolytic solution external flow path) includes the electrolytic solution (flow path) switching mechanism having the first three-way valve 53, the second three-way valve 54, the third three-way valve 55, the fourth three-way valve 56, and the bypass pipes 57 and 58 as in the first embodiment. The cathode-side external flow path (CO₂ external flow path) includes the CO₂ (flow path) switching mechanism having the fifth three-way valve 44, the sixth three-way valve 45, the seventh three-way valve 46, the eighth three-way valve 47, and the bypass pipes 48 and 49, as in the third embodiment.

The concrete configurations of the external flow path and switching mechanism are as described in detail in the first and third embodiments. The first and second flows of the anode solution (electrolytic solution) can be switched based on the measurement results, and the like of the thermometer provided at the anode flow path 12 or the pipes 51 and 52 connected thereto, as described in the first embodiment. The third and fourth flows of the CO₂ gas can be switched based on the measurement results, and the like of gas concentration meters and pH meters installed in the cathode flow path 22 and the pipes 42 and 43 connected thereto, as described in the third embodiment. Furthermore, if there is not much difference in the timing of the temperature change of the anode solution and the concentration change of the CO₂ gas, the switching of the first and second flows in the anode solution and the third and fourth flows in the CO₂ gas can be carried out simultaneously.

The electrolytic device 1 of the fifth embodiment is not limited to the combination of the first and third embodiments but may be a combination of the first and fourth embodiments, a combination of the second and third embodiments, a combination of the second and fourth embodiments, or other combinations. Furthermore, various patterns of the anode and cathode flow paths can be applied, such as mirror-matched flow path patterns, combinations of different flow path patterns, or other patterns, as described above, and are not limited thereto.

The configurations in the embodiments can be applied in combination and partially replaced. While certain embodiments of the present invention have been described herein, these embodiments have been presented by way of example only, and are not intended to limit the scope of the inventions. The embodiments described herein may be embodied in a variety of other forms; furthermore, various omissions, substitutions, and changes may be made without departing from the spirit of the inventions. The embodiments and modifications fall within the scope and spirit of the inventions and fall within the scope of the inventions as set forth in claims and their equivalents.

## Claims

1. A carbon dioxide electrolytic device, comprising:
an electrolysis cell that includes a cathode configured to reduce carbon dioxide to produce a carbon compound, an anode configured to oxidize water to produce oxygen, an anode flow path having a first opening provided on one end side and a second opening provided on the other end side and configured to supply an electrolytic solution containing water to the anode, a cathode flow path having a third opening provided on one end side and a fourth opening provided on the other end side and configured to supply carbon dioxide to the cathode, and a separator configured to separate the anode from the cathode;
a carbon dioxide supply unit configured to supply the carbon dioxide to the cathode flow path;
an electrolytic solution supply unit configured to supply the electrolytic solution to the anode flow path;
an external flow path that includes at least one of an electrolytic solution external flow path including a first pipe configured to connect the electrolytic solution supply unit to the first opening of the anode flow path, a second pipe connected to the second opening of the anode flow path, and a third pipe configured to connect the electrolytic solution supply unit to the second opening of the anode flow path, and a carbon dioxide external flow path including a fourth pipe configured to connect the carbon dioxide supply unit to the third opening of the cathode flow path, a fifth pipe connected to the fourth opening of the cathode flow path, and a sixth pipe configured to connect the carbon dioxide supply unit to the fourth opening of the cathode flow path; and
a flow path switching mechanism that includes at least one of an electrolytic solution switching mechanism configured to switch between a first flow in which the electrolytic solution flows from the first opening toward the second opening through the anode flow path and a second flow in which the electrolytic solution flows from the second opening toward the first opening through the anode flow path, and a carbon dioxide switching mechanism configured to switch between a third flow in which the carbon dioxide flows from the third opening toward the fourth opening through the cathode flow path and a fourth flow in which the carbon dioxide flows from the fourth opening toward the third opening through the cathode flow path.

2. The device according to claim 1, wherein
the first pipe has a first switching valve and a second switching valve and is connected to the first opening through the first switching valve and the second switching valve,
the second pipe has a third switching valve and a fourth switching valve and is connected to the second opening through the third switching valve and the fourth switching valve,
the third pipe has a first bypass pipe connecting the first switching valve to the third switching valve and a second bypass pipe connecting the second switching valve to the fourth switching valve, and
the electrolytic solution switching mechanism is configured to switch between the first flow and the second flow by controlling operations of the first switching valve, the second switching valve, the third switching valve, and the fourth switching valve.

3. The device according to claim 2, further comprising:
a detection unit provided in at least one of the first opening, the second opening, the first pipe, and the second pipe of the anode flow path and including a thermometer to measure a temperature of the electrolytic solution, and
an electrolytic solution switching control unit configured to control operations of the first switching valve, the second switching valve, the third switching valve, and the fourth switching valve to switch between the first flow and the second flow based on detection results of the detection unit.

4. The device according to any one of claim 1 to claim 3, wherein
the fourth pipe has a fifth switching valve and a sixth switching valve and is connected to the third opening through the fifth switching valve and the sixth switching valve,
the fifth pipe has a seventh switching valve and an eighth switching valve and is connected to the fourth opening through the seventh switching valve and the eighth switching valve,
the sixth pipe has a third bypass pipe connecting the fifth switching valve to the seventh switching valve and a fourth bypass pipe connecting the sixth switching valve to the eighth switching valve, and
the carbon dioxide switching mechanism is configured to switch between the third flow and the fourth flow by controlling operations of the fifth switching valve, the sixth switching valve, the seventh switching valve, and the eighth switching valve.

5. The device according to claim 4, further comprising:
a detection unit provided in at least one of the third opening, the fourth opening, the fourth pipe, and the fifth pipe of the cathode flow path and including a gas concentration meter to measure a concentration of gas discharged from the cathode flow path, and
a carbon dioxide switching control unit configured to control operations of the fifth switching valve, the sixth switching valve, the seventh switching valve, and the eighth switching valve to switch between the third flow and the fourth flow based on detection results of the detection unit.

6. The device according to claim 1, wherein
the electrolytic solution supply unit includes a first electrolytic solution supply unit and a second electrolytic solution supply unit,
the first pipe has a first switching valve and is connected to the first opening through the first switching valve,
the second pipe has a second switching valve and a third switching valve, and is connected to the second opening through the second switching valve and the third switching valve,
the third pipe has a first bypass pipe connected to the second switching valve and a second bypass pipe connecting the first switching valve to the third switching valve,
the electrolytic solution switching mechanism is configured to control operations of the first switching valve, the second switching valve, and the third switching valve to switch between the first flow containing the electrolytic solution from the first electrolytic solution supply unit and the second flow containing the electrolytic solution from the second electrolytic solution supply unit.

7. The device according to claim 1, wherein
the carbon dioxide supply unit includes a first carbon dioxide supply unit and a second carbon dioxide supply unit,
the fourth pipe has a fifth switching valve and is connected to the third opening through the fifth switching valve,
the fifth pipe has a sixth switching valve and a seventh switching valve and is connected to the fourth opening through the sixth switching valve and the seventh switching valve,
the sixth pipe has a first bypass pipe connected to the sixth switching valve and a second bypass pipe connecting the fifth switching valve to the seventh switching valve, and
the carbon dioxide switching mechanism is configured to control operations of the fifth switching valve, the sixth switching valve, and the seventh switching valve to switch between the third flow containing the carbon dioxide from the first carbon dioxide supply unit and the fourth flow containing the carbon dioxide from the second carbon dioxide supply unit.

8. The device according to any one of claim 1 to claim 7, further comprising:
a detection unit that includes at least one of a thermometer, a pressure sensor, a gas concentration meter, a flow meter, a conductivity meter, and a pH sensor provided in at least one of the first opening, the second opening, the first pipe, and the second pipe of the anode flow path, the third opening, the fourth opening, the fourth pipe, and the fifth pipe of the cathode flow path, and
at least one of an electrolytic solution switching control unit configured to control operations of the electrolytic solution switching mechanism to switch between the first flow and the second flow, and a carbon dioxide switching control unit configured to control operations of the carbon dioxide switching mechanism to switch between the third flow and the fourth flow based on detection results of the detection unit.

9. A method of electrolyzing carbon dioxide, comprising:
a process of supplying gas containing carbon dioxide from a carbon dioxide supply unit to a cathode of an electrolysis cell through a cathode flow path, and supplying an electrolytic solution containing water from an electrolytic solution supply unit to an anode of the electrolysis cell through an anode flow path; and
a process of reducing carbon dioxide to produce a carbon compound by applying a voltage between the cathode and the anode, wherein
the process of supplying the gas containing carbon dioxide and the electrolytic solution containing water includes:
a first process of supplying the electrolytic solution containing water from the electrolytic solution supply unit to the anode flow path from a first opening provided on one end side toward a second opening provided on the other end side; and a second process of supplying the electrolytic solution containing water from the electrolytic solution supply unit to the anode flow path from the second opening toward the first opening, and the first process and the second process are conducted in a switched manner, and/or
a third process of supplying the gas containing carbon dioxide from the carbon dioxide supply unit to the cathode flow path from a third opening provided on one end side toward a fourth opening provided on the other end side; and a fourth process of supplying the gas containing carbon dioxide from the carbon dioxide supply unit to the cathode flow path from the fourth opening toward the third opening, and the third process and the fourth process are conducted in a switched manner.

10. The method according to claim 9, wherein
the first process is conducted by supplying the electrolytic solution from the electrolytic solution supply unit to the anode flow path from the first opening toward the second opening through a first pipe connecting the electrolytic solution supply unit to the first opening, a first switching valve and a second switching valve provided in the first pipe, a second pipe connected to the second opening, and a third switching valve and a fourth switching valve provided in the second pipe, and
the second process is conducted by switching the first switching valve, the second switching valve, the third switching valve, and the fourth switching valve, and by supplying the electrolytic solution from the electrolytic solution supply unit to the anode flow path from the second opening toward the first opening through a first bypass pipe connecting the first switching valve to the third switching valve and a second bypass pipe connecting the second switching valve to the fourth switching valve.

11. The method according to claim 9 or claim 10, wherein
the electrolytic solution supply unit includes a first electrolytic solution supply unit and a second electrolytic solution supply unit, wherein
the first process is conducted by supplying the electrolytic solution from the first electrolytic solution supply unit to the anode flow path from the first opening toward the second opening through a first pipe connecting the first electrolytic solution supply unit to the first opening, a first switching valve provided in the first pipe, a second pipe connected to the second opening, and a third switching valve and a fourth switching valve provided in the second pipe, and
the second process is conducted by switching the first switching valve, the second switching valve, and the third switching valve, and by supplying the electrolytic solution from the second electrolytic solution supply unit to the anode flow path from the second opening toward the first opening through a first bypass pipe connecting the second electrolytic solution supply unit to the second switching valve and a second bypass pipe connecting the first switching valve to the third switching valve.

12. The method according to claim 9 or claim 10, wherein
the third process is conducted by supplying the gas from the carbon dioxide supply unit to the cathode flow path from the third opening toward the fourth opening through a fourth pipe connecting the carbon dioxide supply unit to the third opening, a fifth switching valve and a sixth switching valve provided in the fourth pipe, a fifth pipe connected to the fourth opening, and a seventh switching valve and an eighth switching valve provided in the fifth pipe, and
the fourth process is conducted by switching the fifth switching valve, the sixth switching valve, the seventh switching valve, and the eighth switching valve, and by supplying the gas from the carbon dioxide supply unit to the cathode flow path from the second opening toward the first opening through a first bypass pipe connecting the fifth switching valve to the seventh switching valve and a second bypass pipe connecting the sixth switching valve to the eighth switching valve.

13. The method according to claim 9 or claim 10, wherein
the carbon dioxide supply unit includes a first carbon dioxide supply unit and a second carbon dioxide supply unit, wherein
the third process is conducted by supplying the gas from the first carbon dioxide supply unit to the cathode flow path from the third opening toward the fourth opening through a fourth pipe connecting the first carbon dioxide supply unit to the third opening, a fifth switching valve provided in the fourth pipe, a fifth pipe connected to the fourth opening, and a sixth switching valve and a seventh switching valve provided in the fifth pipe, and
the fourth process is conducted by switching the fifth switching valve, the sixth switching valve, and the seventh switching valve, and by supplying the gas from the second carbon dioxide supply unit to the cathode flow path from the fourth opening toward the third opening through a first bypass pipe connecting the second carbon dioxide supply unit to the sixth switching valve and a second bypass pipe connecting the fifth switching valve to the seventh switching valve.

14. The method according to any one of claim 9 to claim 13, wherein
the switching between the first process and the second process and/or between the third process and the fourth process is conducted based on detection results of a detection unit including at least one of a temperature sensor, a pressure sensor, a gas concentration meter, a flow meter, a conductivity meter, and a pH sensor provided in at least one of the first opening, the second opening, the first pipe, and the second pipe of the anode flow path, the third opening, the fourth opening, the fourth pipe, and the fifth pipe of the cathode flow path.
